(19) Europäisches Patentamt
European Patent Office
Office européen des brevets

(11) **EP 4 388 202 B1**

(12) **EUROPEAN PATENT SPECIFICATION**

(45) Date of publication and mention
of the grant of the patent:
**31.12.2025 Bulletin 2026/01**

(21) Application number: **22764722.9**

(22) Date of filing: **11.08.2022**

(51) International Patent Classification (IPC):
*F04D 15/00* *(2006.01)*      *F04D 13/06* *(2006.01)*

(52) Cooperative Patent Classification (CPC):
**F04D 15/0088; F04D 13/06;** F04D 29/2283;
F05D 2270/304; F05D 2270/335

(86) International application number:
**PCT/EP2022/072526**

(87) International publication number:
**WO 2023/020928 (23.02.2023 Gazette 2023/08)**

(54) **METHOD FOR DETERMINING A FLOW RATE THROUGH A PUMP**

VERFAHREN ZUR BESTIMMUNG EINER DURCHFLUSSMENGE DURCH EINE PUMPE

PROCÉDÉ DE DÉTERMINATION D'UN DÉBIT À TRAVERS UNE POMPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2021 DK PA202170412**

(43) Date of publication of application:
**26.06.2024 Bulletin 2024/26**

(73) Proprietor: **Grundfos Holding A/S**
**8850 Bjerringbro (DK)**

(72) Inventors:
• **MORTENSEN, Lars Sund**
**8850 Bjerringbro (DK)**
• **JENSEN, Kim Hulegaard**
**8850 Bjerringbro (DK)**

(74) Representative: **Guardian**
**IP Consulting I/S**
**Diplomvej, Building 381**
**2800 Kgs. Lyngby (DK)**

(56) References cited:
**EP-A1- 2 955 384**      **EP-A1- 3 822 489**
**DE-A1- 102019 208 148**

## Description

## Technical field

The present disclosure relates to a method and apparatus for determining a flow rate through a pump.

## Background

Pumps, in particular centrifugal pumps, are widely used in different technical areas, such as in HVAC systems, water supply systems, waste water systems, in oil production systems and/or the like.

In many applications, it is desirable to know the flow rate through the pump. While it is possible to determine the flow rate by means of a flow sensor, this is often not a desirable solution, as flow sensors are relatively expensive. Moreover, flow sensors can often not be freely positioned and their installation may cause the size and/or complexity of the system to increase.

For example, flow estimation is a desirable functionality in circulator pumps installed in HVAC-systems, as flow estimation may be used for implementing control curves and because many pumps include a man-machine interface for presenting the flow through the pump. Flow estimation also enables advanced features like balancing and controlling HVAC systems without the extra cost for a physical sensor in the circulator pump or otherwise installed in the HVAC-system.

In principle, the flow rate can be determined from the motor power, i.e. the power consumed by the pump's motor, and from the pump speed. Thus, if the speed is known and the motor power at that speed is known, then the flow rate can be determined, e.g. from measured power curves relating motor power and flow rate at respective speeds.

However, it is challenging to provide a method for flow estimation that is accurate over a wide range of parameters, in particular over a wide range of pump speeds and flow rates.

EP 3 036 509 discloses a method for determining a through-flow quantity in a fluid delivery system, in which a fluid is delivered by a pump, the pump comprising an electromotor and the electromotor being operated at a first speed when said electromotor is in operation and the through-flow quantity being determined from a measured motor power and the speed. According to this prior art method, the first speed is increased to a second speed which is greater than the first speed, a second through-flow quantity at the second speed is determined from the motor power and the second speed, a third through-flow quantity is determined from the second through-flow quantity by extrapolation of the second speed to the first speed, wherein the third through-flow quantity is the target variable and, once the second through-flow quantity has been determined, the speed is reduced back to the first speed. This prior art method attempts to avoid possible systematic errors that may be caused at low flow rates due to bearing friction or intrinsic consumption of electrical and electronic components of the motor. EP 3 822 489 A1 discloses a computer-implemented method for determining a forward flow rate of fluid flow through a pump, the pump comprising an impeller and a pump motor, the forward flow rate being responsive to the impeller being driven by the pump motor to rotate in a forward direction and at a forward speed.

However, there remain other challenges for an accurate flow estimation. In particular, modern pumps, in particular centrifugal pumps, are often carefully designed in order to increase pump efficiency and/or other pump performance parameters. For example efforts are made to optimize the design of the pump impeller, in particular for obtaining energy-efficient centrifugal pumps. While this is very desirable, it renders the task of estimating the flow rate through the pump based on the power curves even more challenging. For example, at low speed, the power curves of many modern pumps generally tend to be very flat which renders flow estimation difficult because very small changes in motor power result in relatively large changes in estimated flow, i.e. small inaccuracies of the power curves may lead to large errors in the estimated flow rate. Yet further, at high flow rates, the power curves of many modern pumps are no longer monotonically increasing. Accordingly, there is no unique relationship between power and flow. There is also a flow range in the vicinity of the change in monotony, where the power curves are relatively flat and result in similar challenges for estimating the flow rate.

Accordingly, it remains desirable to provide an improved method for determining the flow rate through a pump, or at least to provide an alternative method for determining the flow rate through a pump. Moreover, it is desirable to provide a method for determining a flow rate through a pump that may be applied to a variety of pump designs.

It is further generally desirable to provide a method for determining a flow rate through a pump that is accurate, robust, fast and cost efficient.

## Summary

According to one aspect, disclosed herein are embodiments of a computer-implemented method for determining a forward flow rate of fluid flow through a pump, in particular a centrifugal pump, the pump comprising an impeller and a pump motor, the forward flow rate being responsive to the impeller being driven by the pump motor to rotate in a forward direction at a forward speed, the method comprising:

    a) obtaining an observed reverse power of the pump motor when the pump motor is operated, in particular temporarily operated, to drive the impeller in a reverse direction at a reverse speed, opposite the forward direction;
    b) computing an estimate of the forward flow rate from at least the observed reverse power.

The inventors have realized that an accurate estimate of a forward flow rate through a pump may be obtained by temporarily driving the pump in a reverse direction and observing the power of the pump motor during operation of the impeller in the reverse direction. In particular, this process has been found to avoid the difficulties of accurately determining the forward flow rate from a measurement of the forward motor power when driving the impeller in the forward direction. The difficulties of accurately determining the forward flow rate directly from a measurement of the forward motor power would otherwise be caused by a relatively flat or even non-monotonic power curve applicable for forward operation of the impeller, i.e. a flat or even non-monotonic dependence of the motor power on the flow rate when the impeller is driven in the forward direction. In order to observe the reverse power when driving the impeller in the reverse direction, the pump normally only needs to be driven in the reverse direction for a short period of time, e.g. only for few seconds, which is acceptable in many situations.

For the purpose of the present description, the terms "forward" and "reverse" relate to the normal intended use of the pump. In particular, the term "forward direction" refers to the direction of rotation of the impeller during normal operation of the pump, while the term reverse direction refers to the direction opposite the forward direction. For example, in an embodiment where, during normal operation of the pump, the impeller is driven in a clockwise direction, the reverse direction is the counter-clockwise direction, and vice versa. The design of the pump and, in particular, the design of the impeller, is typically optimized so as to provide an energy efficient operation of the pump in the forward direction.

In the following, the terms "forward flow rate", "forward power" and "forward speed" will be used to refer to the values of the flow rate, the power and the speed, respectively, during operation of the impeller in the forward direction. Similarly, the terms "reverse flow rate", "reverse power" and "reverse speed", as used herein, refer to the respective values of the flow rate, the power and the speed during rotation of the impeller in the reverse direction. It will be appreciated that the forward direction may be different from pump to pump or from impeller to impeller: While some pumps are configured to be driven in a clockwise direction, others may be configured to be driven in a counter-clockwise direction. The forward direction may thus be considered a property of the impeller or the pump. It will be appreciated that, in centrifugal pumps, the direction of the fluid flow will generally be the same regardless of whether the impeller is driven in forward or reverse direction. However, the magnitude of the flow, i.e. the flow rate, will typically be different depending on whether the impeller is driven in the forward direction or in the reverse direction. Hence, the terms forward flow rate and reverse flow rate as used herein are not intended to indicate the direction of the flow but rather the flow rate responsive to operation of the impeller in the forward and reverse directions, respectively. It is further noted that the relationship between applied power and flow rate is typically different for forward and reverse operation of the impeller, respectively. Accordingly, for the purpose of the present description, the term "forward power curve" of a pump refers to the functional relationship between the forward flow rate and the forward motor power, which is applied when the impeller is driven in the forward direction. Similarly, the term "reverse power curve" of a pump refers to the functional relationship between the reverse flow rate and the reverse motor power, which is applied when the impeller is driven in the reverse direction.

Accordingly, embodiments of the method disclosed herein compute an estimate of the forward flow rate of fluid flow through the pump from at least an observed reverse power of the pump motor, observed when the pump motor is operated, in particular temporarily operated, to drive the impeller in the reverse direction, opposite the forward direction.

The term "speed" is intended to refer to the absolute value of the rotational speed of the impeller, e.g. as expressed in rotations per minute (rpm), i.e. without per se indicating a direction. In particular, in some embodiments, the reverse speed, at which the reverse power is observed, is chosen to be equal to the forward speed for which the forward flow rate is to be computed. This provides a particularly simple and memory-efficient implementation. The computing may thus be based on at least the observed reverse power and the forward speed. Alternatively, in some embodiments, the reverse speed is chosen to be different from the forward speed. The computing may thus comprise computing the estimate of the flow rate from at least the observed reverse power, the forward speed and the reverse speed.

The estimate of the forward flow rate is computed from at least the observed reverse power, the forward speed and from a predetermined representation of a relationship between the observed reverse power and the forward flow rate through the pump, wherein the observed reverse power is observed when the motor is operated to drive the impeller in the reverse direction at the reverse speed, and wherein the forward flow rate through the pump is the forward flow rate though the pump when the impeller is driven in the forward direction at the forward speed. Accordingly, rather than directly computing the forward flow rate based on an observed forward power and from a relationship between the forward power, observed when the motor is operated to drive the impeller in the forward direction, and the forward flow rate, the predetermined representation relates the reverse power to the forward flow rate. This has been found to provide a more accurate estimation of the forward flow rate for some, if not all, operation regimes.

The predetermined representation may be stored in, otherwise maintained by and/or accessible to a data processing unit implementing the computer-implemented method disclosed herein. For example, the predetermined representation may be stored as part of a computer-program implementing the method, or separate therefrom, e.g. as a configuration or data file or in any other suitable manner which allows the processing unit executing the computer-implemented method to access the predetermined representation. The predetermined representation may be stored locally by the processing unit or in a memory accessible to the data processing unit. Alternatively, the predetermined representation may be stored remotely from the data processing unit and be accessible to the data processing unit via a suitable wired or wireless data communications interface.

In some embodiments, the predetermined representation represents a reverse power curve and a flow relationship. The reverse power curve is indicative of a relationship between the reverse flow rate and the reverse power, observable when the motor is operated to drive the impeller in the reverse direction at the reverse speed. The flow relationship is indicative of a relationship between the forward flow rate and the reverse flow rate, the forward flow rate being the flow rate when the impeller is driven in the forward direction at the forward speed and the reverse flow rate being the flow rate when the impeller is driven in the reverse direction at the reverse speed.

The predetermined representation may be one of a set of predetermined representations, in particular one of a set of stored representations. The set of predetermined representations may represent multiple reverse power curves at respective reverse speeds and/or multiple flow relationships at respective pairs of forward and reverse speeds. If the reverse speed is chosen to have a fixed relationship to the forward speed, the number of flow relationships may be reduced. For example, the fixed relationship may be equality, i.e. the reverse speed may be chosen to be equal to the forward speed. Consequently, when the forward and reverse speeds are chosen to be equal, the set of predetermined representations may comprise multiple reverse power curves at respective reverse speeds and/or multiple flow relationships at respective forward speeds. Alternatively, the reverse speed may be chosen to be a fixed multiple or a fixed fraction of the forward speed.

The reverse power curves and the flow relationships may be represented as separate relationships, e.g. as a set of reverse power curves and as a separate set of flow relationships. Alternatively, the reverse power curves may be combined with corresponding flow relationships so as to establish a set of direct relationships. In particular, in some embodiments, the set of predetermined representations may represent respective direct relationships, applicable at respective reverse and forward speeds, between the reverse power, observed when operating the motor to drive the impeller in the reverse direction at the reverse speed, and the forward flow rate through the pump when the impeller is driven in the forward direction at the forward speed, thereby providing a particularly compact representation, which is memory efficient and computationally efficient. For example, in the case where the reverse speed is chosen to be equal to the forward speed, the set of direct relationships may include direct relationships for respective forward speeds where each direct relationship maps an observed reverse power directly onto a corresponding flow rate of the pump obtained when the impeller is operated at the forward speed in the forward direction.

The set of predetermined representations, e.g. the predetermined - such as stored - reverse power curves and/or the flow relationships and/or the set of direct relationships between reverse power and forward flow rate, may be predetermined from measurements performed on said pump or at least on a corresponding pump, e.g. on a pump of the same type or model. In some embodiments, the set of predetermined representations is based on measurements performed on multiple pumps of the same type or model. During such measurements the actual flow may be measured by a suitable flow sensor. Once established, the established functional relationships may be represented in any suitable form, e.g. as a set of look-up tables, as a set of model parameters of respective functional approximations of the established relationships or in another suitable manner.

In some embodiments, the reverse power curve, i.e. the reverse power as a function of the reverse flow rate, applicable when the impeller is driven in the reverse direction at the reverse speed, is monotonically increasing while the forward power curve, i.e. the forward power as a function of the forward flow rate, applicable when the impeller is driven in the forward direction at the forward speed, is non-monotonic, i.e. has a local maximum. Preferably, the reverse power curve has a derivative larger than a derivative of the forward power curve, preferably over the entire operational range, i.e. for all operational flow rates.

The pump motor drives the impeller in the reverse direction only temporarily. It will be appreciated that the duration of the reverse operation may depend on the situation, e.g. on the number of flow estimates to be obtained in short succession. In some embodiments, temporarily operating the pump motor to drive the impeller in the reverse direction may include operating the pump motor to drive the impeller in the reverse direction for as long as required in order to obtain the reverse power value, in particular only for as long as required in order to obtain the reverse power value. This may be preferred in situations where updated flow estimates are only required relatively infrequently, e.g. during stable operation of a system. In some embodiments, temporarily operating the pump motor to drive the impeller in the reverse direction may include operating the pump motor to drive the impeller in the reverse direction for no more than 5 minutes, such as for no more than 1 minute, such as no more than 30 seconds, such as no more than 10 seconds, such as between 1 second and 5 minutes, such as between 1 second and 60 seconds, e.g. between 1 second and 30 seconds, such as between 1 second and 10 seconds. In other embodiments, it may be desirable to drive the impeller in the reverse direction for a longer period, e.g. long enough to obtain multiple reverse power values for computing multiple flow estimates in relatively short succession. For example, this may be desirable during an initial configuration or adjustment of a system where repeated flow estimates are needed or desirable in order to adjust one or more operating parameters of the system. In such a situation, it may be desirable to operate the impeller in the reverse direction during the entire system configuration/adjustment or during at least a part of the system configuration or adjustment. Accordingly, temporarily operating the pump motor to drive the impeller in the reverse direction may include operating the pump motor to drive the impeller in the reverse direction for more than 5 minutes, e.g. between 5 minutes and several hours, e.g. 5 h, 2 h or 1 h.

Obtaining the observed reverse power may include receiving information indicative of the observed power, e.g. from a drive circuit of the pump motor. Alternatively, the observed reverse power may be measured or obtained in another suitable manner. In some embodiments, obtaining the observed reverse power comprises:

> a1) causing the pump motor to drive the impeller in a reverse direction, opposite the forward direction, and at the reverse speed;
> a2) obtaining the observed reverse power when the pump motor is operated to drive the impeller in the reverse direction at the reverse speed; and a3) causing the pump motor to drive the impeller in the forward direction at the forward speed when said observed reverse power has been measured.

To this end the computer-implemented process may send suitable control signals to the pump motor or to a drive circuit controlling the pump motor, and the computer-implemented process may receive information indicative of the observed power, e.g. from the drive circuit or otherwise. The actual computation of the estimate of the forward flow rate may be performed while the impeller is still operating in the reverse direction or after the pump motor again drives the impeller in the forward direction. It will further be appreciated that the forward speed applied prior to the determination of the observed reverse power may in principle be different from the forward speed applied after determination of the observed reverse power. This may e.g. be the case when the flow computation is performed in connection with a change of forward speed from a first forward speed to a second forward speed. In such a situation, it may be desirable to compute the forward flow rate at the changed, i.e. at the second, forward speed. In such a situation, the impeller may initially be driven at the first forward speed. The direction of the impeller may then be reversed an the impeller may be driven at a reverse speed equal to the second forward speed so as to observe the reverse motor power at said reverse speed and to compute the estimated forward flow rate at the second forward speed. The impeller may then again be driven in the forward direction, but now at the second forward speed.

In some embodiments, the flow estimation may be performed based on an observed reverse power, regardless of the current operational regime of the pump, in particular regardless of the current motor power or flow rate. In other embodiments, the flow estimation may be performed based on the observed reverse power only over a portion of the operational range of the pump, in particular only for some values of the motor power or flow rate. To this end, in some embodiments, the method comprises receiving an observed forward power of the pump motor and/or a current forward speed when the pump motor is operated to drive the impeller in the forward direction. Responsive to the observed forward power and/or the forward speed, the process may then selectively either compute the estimate of the forward flow rate from at least the observed forward power and the forward speed, or determine the estimate of the forward flow rate by performing acts a) and b) described above. For example, the process may automatically determine, based on a predetermined criterion, whether to compute the estimate of the forward flow rate directly from at least the observed forward power and the forward speed or to determine the estimate of the forward flow rate indirectly, based on an observed reverse power, i.e. by performing acts a) and b). The predetermined criterion may be based on the properties of the forward power curve applicable to the current forward speed. For example, in some embodiments, the method comprises comparing the observed forward power with one or more predetermined ranges or thresholds of forward powers. In one embodiment, if the observed forward power falls within the one or more predetermined ranges, or is below the threshold, the method may comprise computing the estimate of the forward flow rate from at least the observed forward power and the forward speed; otherwise, the method may comprise determining the estimate of the forward flow rate by performing acts a) and b). The one or more predetermined ranges or thresholds may be speed dependent. The predetermined one or more ranges may include one or more ranges wherein the forward power curve provides a unique mapping of the forward power to a single flow rate and/or wherein a derivate of the forward power curve is larger at a threshold derivative. In such embodiments, the computation of the estimate of the forward flow rate from at least the observed forward power and the forward speed may be based on a predetermined representation of a set of forward power curves.

In some embodiments, the pump motor is an electrical motor. Accordingly, the forward power and the reverse power may be expressed as the electrical power of the pump motor when driving the impeller in the forward and reverse direction, respectively. The forward and reverse powers and/or the forward and reverse speeds of a pump are typically easily obtained directly from a drive circuit of the pump motor or can otherwise readily be obtained without complicated modifications of the pump motor or drive circuit and without the need for expensive sensors, such as hydraulic sensors, such as pressure or flow sensors. In particular, at least some embodiments of the method disclosed herein receive the forward/reverse rotational speed of the pump motor and the forward/reverse electrical power as the only observed or set input values. In particular, at least in some embodiments, the method does not rely on any measurements of a flow rate by a flow sensor.

It is noted that features of the various embodiments of a computer-implemented method described above and in the following may be implemented at least in part in software or firmware and carried out on a data processing unit or other data processing system caused by the execution of program code means such as computer-executable instructions. Alternatively, the features of the computer-implemented method may be implemented by an otherwise suitably configured data processing unit. Here and in the following, the term data processing unit comprises any circuit and/or device suitably adapted to perform the above functions. In particular, a data processing unit programmed or otherwise configured to implement an embodiment of the method disclosed herein receives the observed reverse power and speed setting(s) as inputs. The data processing unit computes a forward flow rate from the received input values and from a predetermined representation of a relationship between the observed reverse power and the forward flow rate as described herein. The term data processing unit comprises general- or special-purpose programmable microprocessors, Digital Signal Processors (DSP), Application Specific Integrated Circuits (ASIC), Programmable Logic Arrays (PLA), Field Programmable Gate Arrays (FPGA), Graphical Processing Units (GPU), special purpose electronic circuits, etc., or a combination thereof. The data processing unit may be a data processing unit integrated into a pump, e.g. as part of a pump control unit or as a separate data processing unit of the pump. Alternatively, the data processing unit may be a data processing unit of a computing device or other data processing system external to the pump.

The present disclosure relates to different aspects, including the method described above and in the following, further methods, systems, devices and product means, each yielding one or more of the benefits and advantages described in connection with one or more of the other aspects, and each having one or more embodiments corresponding to the embodiments disclosed in connection with one or more of the other aspects described herein and/or as disclosed in the appended claims.

In particular, another aspect disclosed herein relates to embodiments of a data processing unit configured to perform the computer-implemented acts of the computer-implemented method described herein. To this end, the data processing unit may have stored thereon program code configured, when executed by the data processing unit, to cause the data processing unit to perform the acts of the method described herein. In some embodiments, the data processing unit may be implemented as, or comprised in, an integrated processing unit of a pump and/or a data processing system external to the pump. The data processing unit may include a memory for storing a suitable computer program and/or a representation of a set of relationships between reverse powers and flow rates.

Another aspect disclosed herein relates to a pump comprising a data processing unit configured to perform the acts of an embodiment of the method described herein. The pump may comprise an impeller and a pump motor configured to drive the impeller. The pump may further comprise a drive circuit controlling the pump motor. The data processing unit of the pump may be integrated into the drive circuit of the pump, which controls the pump motor. Accordingly, the drive circuit of the pump may be suitably programmed to perform an embodiment of the process described herein. Alternatively, the data processing unit may be integrated into another control unit of the pump, different from the drive circuit, or it may be a completely separate data processing unit of the pump.

Yet another aspect disclosed herein relates to embodiments of a computer program configured to cause a data processing unit to perform the computer-implemented acts of the computer-implemented method described above and in the following. A computer program may comprise program code means adapted to cause a data processing unit to perform the acts of the computer-implemented method disclosed above and in the following when the program code means are executed on the data processing unit. The computer program may be stored on a computer-readable storage medium, in particular a non-transient storage medium, or embodied as a data signal. The non-transient storage medium may comprise any suitable circuitry or device for storing data, such as a RAM, a ROM, an EPROM, EEPROM, flash memory, magnetic or optical storage device, such as a CD ROM, a DVD, a hard disk, and/or the like.

**Brief description of the drawings**

The above and other aspects will be apparent and elucidated from the embodiments described in the following with reference to the drawing in which:

> FIG. 1 schematically illustrates an embodiment of a pump.
> FIG. 2 schematically illustrates a process of determining a flow rate of fluid flow through a pump.
> FIG. 3 shows an example of a set of forward power curves 301 for an example of a centrifugal pump.
> FIG. 4 schematically illustrates an example of the computation of the forward flow rate from the reverse power.

FIG. 5 illustrates an example of the computation of the forward flow rate using an example of the method disclosed herein.

FIG. 6 illustrates the accuracy of an embodiment of the process disclosed herein compared to a direct computation of the forward flow from the forward power curve.

FIG. 7 schematically illustrates another example of a process of determining a flow rate of fluid flow through a pump.

## Detailed description

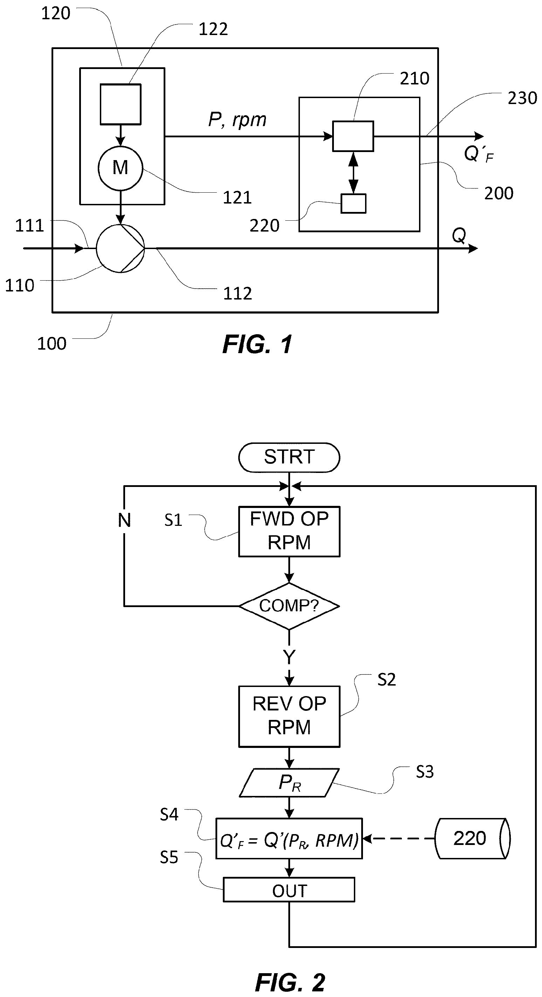

FIG. 1 schematically illustrates an embodiment of a pump. The pump 100 includes a data processing unit 200 integrated into the pump. The pump further includes an impeller 110 and a pump drive 120.

The pump 100 may be a centrifugal pump or a different type of pump. The pump 100 has an inlet 111 for suction of water or a different fluid, such as of a different liquid. The pump 100 also has an outlet 112 for providing the output flow of the pump. The pump drive 120 comprises a motor 121, such as an electrical motor, and a motor drive circuit 122. The motor drive circuit may include a frequency converter for supplying the motor with electrical energy and/or other circuitry for controlling operation of the motor 121. The motor drive circuit may be connectable to a suitable power supply (not shown) in order to supply the drive circuit, e.g. a frequency converter, with electric energy. During operation, the motor 121 drives the impeller 110 causing the pump to pump fluid from the inlet 111 to the outlet 112 at a flow rate Q. The pump is configured, during normal operation, to drive the impeller to rotate in a predetermined forward direction. Nevertheless, the motor may also be controlled to drive the impeller in a reverse direction, opposite the forward direction.

The data processing unit 200 comprises a suitably programmed or otherwise configured processor 210, e.g. a microprocessor, and a memory 220. The memory has stored thereon a computer program and/or data for use by the processing unit. During operation, the data processing unit 200 receives input values from the pump drive 120. The received input values may be indicative of a current power (P), in particular the electrical power, of the pump motor and the current rotational speed ($rpm$) of the impeller. The input values may further include an indication as to whether the power and/or rotational speed relate to a forward or reverse operation of the impeller. In some embodiments, the data processing unit is configured to send a control signal to the motor drive controlling the motor drive to cause the motor to drive the impeller in a particular direction and/or at a particular rotational speed. In particular, the data processing unit may be configured to control the motor drive to temporarily drive the impeller in the reverse direction in order to observe the corresponding reverse power.

The pump drive may provide the input values automatically or upon request by the data processing unit. The data processing unit 200 may receive the input values intermittently, e.g. periodically. The data processing unit 200 computes a computed flow rate $Q'_F$ of fluid flow through the pump 100 based on the received input values and from a set of predetermined representations of reverse power curves and flow relationships as described herein. To this end, the processing device has stored a suitable set of representations applicable to the pump 100 in its memory 220. Alternatively, the processing device has otherwise access to a suitable set of representations applicable to the pump 100, e.g. from a remote data repository. The data processing unit 200 further comprises an output interface 230, e.g. a display or other user-interface and/or a data communications interface, an interface to a data storage device, and/or the like. The data processing system may thus be configured to output the computed flow rate $Q'_F$ via the output interface 230. An example of a computational model for computing the flow rate will be described in more detail below.

In the example of FIG. 1, the data processing unit is integrated into the pump, e.g. accommodated into the same housing as the pump drive 120. Accordingly, the data processing unit 200 may receive input indicative of the current motor power, rotational speed and/or direction of rotation from the pump drive 120, e.g. from the motor drive circuit 122. The data processing unit may receive these and/or other inputs via an internal interface, e.g. a data bus or another suitable wired or wireless interface. Though shown as separate blocks in FIG. 1, it will be appreciated that the data processing unit 200 may partly or completely be integrated with the motor drive circuit. For example, a single control circuit may be configured to control operation of the motor 121 and be configured to perform the computation of the flow rate as described herein.

In alternative embodiments, the computation of the flow rate described herein is performed by a data processing unit external to the pump. Such an external data processing unit may be a suitably programmed computer or other data processing system external to the pump. For example, the data processing unit may be a suitably programmed tablet computer, smartphone or the like. Other examples of a data processing unit may include a control system configured to control one or more pump assemblies. In some embodiments, the external data processing unit may be embodied as a distributed system including more than one computer. In such embodiments, the external data processing unit may be communicatively coupled to the pump, e.g. via a wired or wireless connection. The communication between the pump and the external data processing unit may be a direct communication link or an indirect link, e.g. via one or more nodes of a communications network. Examples of a wired connection include a local area network, a serial communications link, etc. Examples of wireless connections include radio frequency communications link, e.g. Wifi, Bluetooth, cellular communication, etc.

FIG. 2 schematically illustrates a process of determining a flow rate of fluid flow through a pump. The process may e.g. be performed by the pump 100 of FIG. 1. At step S1, the pump is operated during normal operation. In particular, the pump motor is controlled to rotate the impeller in its forward direction, i.e. the direction or rotation the impeller is designed to be operated in. The impeller is rotated at a certain forward speed (*RPM*) which may e.g. be pre-set or automatically adjusted by the motor drive circuit or other control unit. Operation of the impeller in the forward direction at the forward speed causes fluid to flow between the inlet and the outlet of the pump at a forward flow rate $Q_F$. This requires a forward power $P_F$ by the pump motor.

The amount of power required to cause a given flow rate at a certain rotational speed during forward rotation of the impeller is determined by a forward power curve of the pump. Different forward power curves apply to different forward rotational speeds.

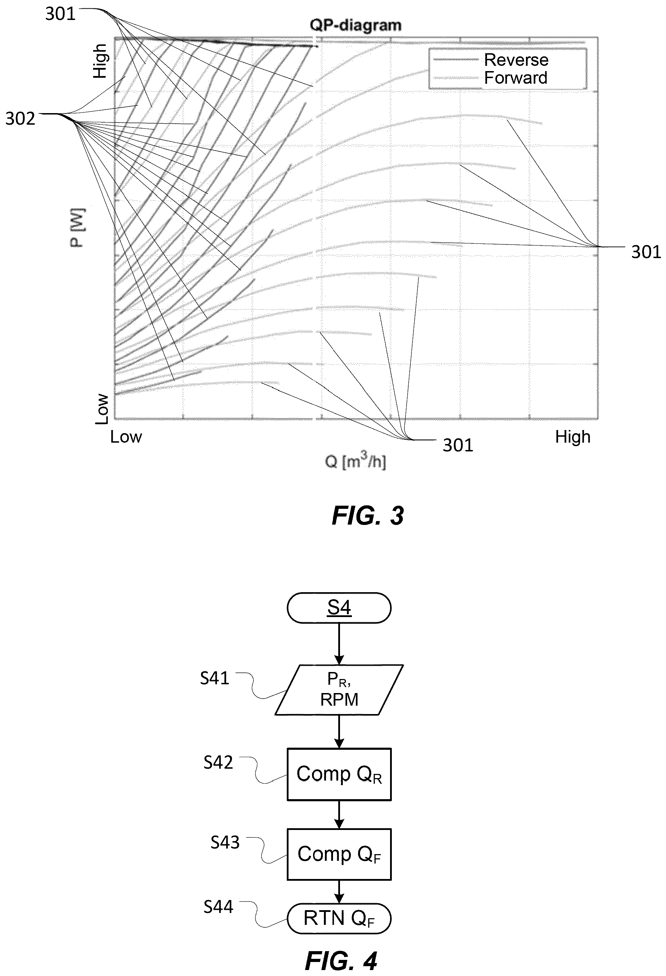

FIG. 3 shows an example of a set of forward power curves 301 for an example of a centrifugal pump. Each forward power curve represents the functional relationship between the forward power and the corresponding forward flow rate for a specific forward speed, i.e. the different forward power curves 301 apply to different forward speeds. In principle, for a given power at a given forward rotational speed, the resulting forward flow rate can be determined from the set of forward power curves 301.

However, in many situations the forward power curves, in particular those of modern, highly efficient pumps, have a flat portion, i.e. at least for some values of the forward flow rate, the required forward power only increases little for obtaining an increased forward flow rate. In some situations, the power curve may even be non-monotonic. In particular, the required forward power may initially increase for increasing forward flow rate, then reach a local maximum and then decrease again responsive to a further increasing forward flow rate. In the example of FIG. 3, the forward power curves 301 illustrate these situations. In the example of FIG. 3, some of the power curves for low rotational speeds are generally very flat. For high forward flow rates, the forward power curves 301 are even non-monotonic. Flat or even non-monotonic power curves cause difficulties when attempting to estimate the flow rate based on a known power. A flat power curve may cause large errors in the flow computation due to even small inaccuracies of the flow measurement and/or due to small inaccuracies of the power curve. In accuracies of the power curve may arise from the fact that the power curve typically represent a model fitted from actual power and flow measurements, possibly measurements from multiple pumps. Accordingly, such a power curve may only represent an approximation, of the actual dependence of the power on the flow. Even if the approximation is very accurate, it may still lead to undesirably large deviations or even errors of the flow estimation when the power curves are flat. A non-monotonic power curve may even result in a failure to determine a unique value for the flow rate for a given power. Accordingly, for many energy efficient, modern pumps an accurate determination of the forward flow rate from a known forward power is difficult, at least within a part of the operational range of the pump.

FIG. 3 further shows corresponding reverse power curves 302 for the same pump. Each reverse power curve represents the functional relationship between the reverse power and the corresponding reverse flow rate for a specific reverse speed, i.e. the different reverse power curves 302 apply to different reverse speeds. As can be appreciated from FIG. 3, for many pumps, the reverse power curves have a shape, which is rather distinct from the corresponding forward power curves. In particular, the reverse flow rate obtained due to a given reverse power is generally considerably smaller than the forward flow rate that is achieved for the same forward power and at the same rotation speed. Moreover, as illustrated by FIG. 3, the reverse power curves for many pumps are monotonically increasing and steeper than the corresponding forward power curves of the same pump. This is at least in part because the impellers are generally designed for energy efficient operation in one direction only. Embodiments of the method disclosed herein seek to exploit these differences in the forward and reverse power curves for obtaining an accurate computation of the forward flow rate.

Accordingly, again referring to FIG. 2, when computation of the current forward flow rate is desired, the process proceeds at step S2. Otherwise, the process merely continues at step S1 driving the pump in the forward direction. The computation of the current flow rate may be triggered in various ways, e.g. by a user input, a request from an external control system, a request from an internal control process, a timer and/or the like.

In any event, when computation of the flow rate is required or desired, at step S2, the process controls the pump motor to drive the impeller in the reverse direction, opposite the forward direction and at a reverse speed equal to the forward speed at which the impeller was driven during the forward operation of step S1- or otherwise equal to a forward speed for which a flow computation is desired. During reverse operation of the impeller, the pump motor uses a reverse power $P_R$ and produces a flow between the inlet and the outlet of the pump at a flow rate $Q_R$.

In subsequent step S3, the process determines the reverse motor power $P_R$ applied for driving the impeller in the reverse direction at the selected reverse speed. For example, the process may obtain the current motor power from the motor drive when the motor drives the impeller in the reverse direction at the reverse speed.

In step S4, the process computes an estimate of the forward flow rate $Q'_F$, which was obtained by the pump during operation of the impeller in the forward direction at the forward speed during step S1. In particular, the process computes the estimate of the forward flow rate from the observed reverse power and from the reverse speed, which is chosen to be equal to the forward speed. The computation is based on a predetermined representation, which is indicative of the reverse power curve at the selected reverse speed and of a flow relationship between reverse flow rate and forward flow rate at the selected reverse speed. The representation may be stored in memory 220 of the processing device that performs the computation or it may otherwise be accessible to the processing device, e.g. be stored remotely and accessible via a suitable communication link. An example of how the forward flow can be computed from the reverse power will be described in more detail below with reference to FIG. 4.

In subsequent step S5, the process outputs the computed forward flow rate, e.g. on a display of the pump or in another suitable manner and returns to step S1 where the process again controls the impeller to rotate in the forward direction at the forward speed. It will be appreciated that the duration of the reverse operation may be selected sufficiently long to allow an accurate determination of the reverse power. Typically, this requires only few seconds of reverse operation, after which the impeller again can be driven in the forward direction. During reverse operation the pump typically provides a lower flow rate than during forward operation. However, as the required period of reverse operation is rather small, this is negligible for the operation of the pump in typical applications.

It will be appreciated that, for the purpose of the computation of the forward flow rate using the present method, the initial and/or subsequent operation of the pump in the forward direction is not required. The computation is merely performed based on the information collected during reverse operation. However, as reverse operation over extended periods of time is normally not desirable for an efficient operation of the pump, the duration of the reverse operation will typically be temporary and kept as short as practical.

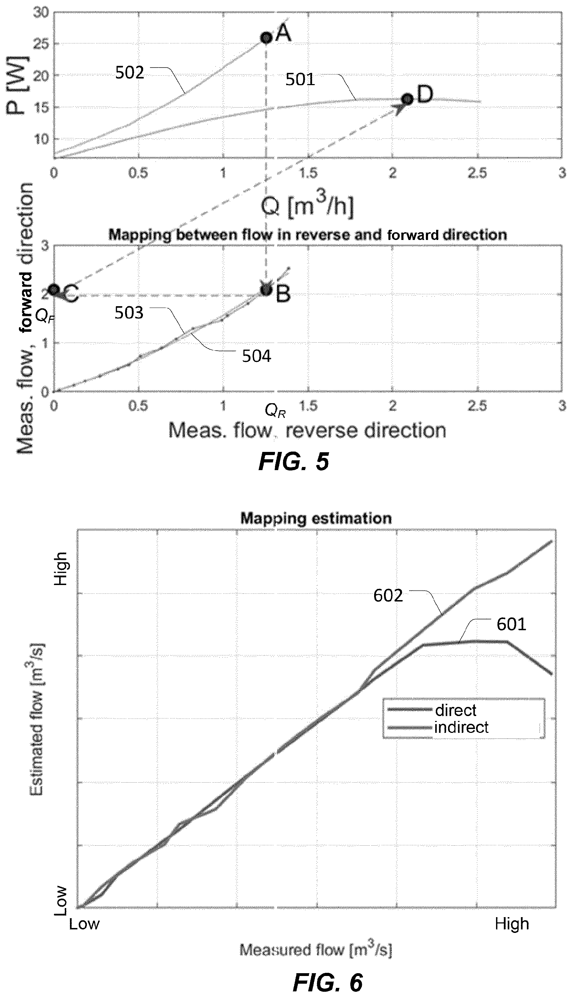

FIG. 4 schematically illustrates an example of the computation of the forward flow rate from the reverse power, e.g. the computation of step S4 or the process of FIG. 2. FIG. 5 further illustrates an example of the computation of the forward flow rate using the method of FIG. 4. In the examples of FIGs. 4 and 5, it will be assumed that the reverse speed is chosen to be equal to the forward speed. In particular, the upper diagram of FIG. 5 shows a forward power curve 501 of a pump applicable for a certain forward speed. Assuming that the pump, during normal operation, is driven with the impeller rotating in its forward direction and with a forward power corresponding to point D on the forward power curve. Since the power curve 501 is very flat and even non-monotonic around point D, an accurate determination of the forward flow rate $Q_F$ directly from the forward power and using the forward power curve 501 is difficult if not impossible. As described above, embodiments of the present method thus temporarily operate the pump in the reverse direction at the same rotational speed, so as to allow for an indirect computation of the forward flow rate at point D. The upper diagram of FIG. 5 also shows the corresponding reverse power curve 502 applicable to the reverse speed that is equal to the forward speed of the forward power curve 501. Observation of the reverse power required to drive the pump at the reverse speed thus allows the process to identify the operational point A on the reverse power curve 502. As can be appreciated from FIG. 5, the reverse power curve 502 is considerable steeper than the forward power curve 501 and, in particular, monotonically increasing, thus allowing an accurate mapping of the reverse power $P_R$ onto the corresponding reverse flow rate $Q_R$ in operational point A.

Accordingly, referring to FIG. 4 with continued reference to FIG. 5, in initial step S41, the process receives as inputs the rotational forward speed and the observed reverse power $P_R$.

In step S42, the process computes the reverse flow $Q_R$ from the reverse power. To this end, the process determines the applicable reverse power curve 502 corresponding to the forward speed. For example, the process may select one of a set of predetermined, e.g. stored, power curves, e.g. one of the reverse power curves 302 illustrated in FIG. 3. To this end, the process may retrieve the reverse power curve that most closely matches the current reverse speed. The predetermined reverse power curves may have been obtained by measuring reverse flows for different motor powers and different rotational speeds and, optionally, computing a suitable fit or other functional model representing the measured data. It will be appreciated that the set pf reverse power curves may not include a power curve that exactly matches the current rotation speed. Accordingly, the process may perform an interpolation between two or more reverse power curves, applicable at respective speeds, in particular adjacent speeds, so as to obtain an interpolated power curve applicable to the current speed.

In subsequent step S43, the process computes the forward flow $Q_F$ from the computed reverse flow $Q_R$. To this end, the process may use a predetermined representation of a flow relationship between forward and reverse flow rates applicable to the current speed.

An example of such a flow relationship is illustrated in the lower diagram of FIG. 5. In particular, the flow relationship may be predetermined based on actual flow measurements on the same pump or on a corresponding pump, e.g. a pump of the same or similar model and, optionally by computing a fitted functional flow relationship from the flow measurements. The lower diagram of FIG. 5 shows results of such measurements as interconnected points 503 and a corresponding smooth model fit as line 504. Different flow relationships may be established for different rotational speeds. Accordingly, the process may retrieve a matching one of a set of predetermined, in particular stored, flow relationships. In some situations, the process may perform an interpolation between two or more of the predetermined flow relationships in order to obtain a flow relationship applicable to the current speed. As can be appreciated from FIG. 5, the relationship 504 between forward and reverse flows is a monotonic function allowing an accurate mapping of a reverse flow to a corresponding forward flow for the same rotational speed. Accordingly, based on the reverse flow, a point B on the flow relationship curve 504 can be identified and used to determine the corresponding forward flow $Q_F$ at point C. The thus identified forward flow is an accurate estimate of the forward flow at operational point D of forward pump operation.

In subsequent step S44, the process returns the thus computed forward flow rate $Q_F$.

Various variations of the computation of the forward flow rate are possible. For example, in the embodiment of FIG. 4, the computation of the forward flow rate is performed in two separate steps, using a reverse power curve and a separate flow representation, respectively:

$$Q_R = f_{RPM} (P_R)$$

$$Q_F = g_{RPM} (Q_R).$$

Here $f_{RPM}$ represents the functional relationship between the reverse power and the corresponding reverse flow rate at a given rotational speed (*RPM*), and $g_{RPM}$ represents the functional relationship between the reverse flow rate and the forward flow rate at the rotational speed.

In an alternative embodiment, for a given rotational speed, the corresponding power curve and flow relationships may be combined into a single, composite mapping, e.g. a composite function

$$h_{RPM} = g_{RPM} \circ f_{RPM},$$

for each rotational speed:

$$Q_F = h_{RPM} (P_R) = g_{RPM}(f_{RPM}(P_R)).$$

Accordingly, only one set of representations of direct mappings from reverse power to forward flow rate need to be stored or otherwise made accessible.

Moreover, in the example of FIG. 4, the reverse speed was chosen to be equal to the forward speed for which the forward flow rate was to be computed. In alternative embodiments, the reverse speed may be selected to be different from the forward speed, e.g. to be a predetermined multiple or a fraction of the forward speed. Depending on how the reverse speed is chosen, the process may thus use a two-dimensional array of flow relationships, where each flow relationship maps a reverse flow at a reverse speed to a corresponding forward flow at a forward speed.

FIG. 6 illustrates the accuracy of an embodiment of the process disclosed herein compared to a direct computation of the forward flow from the forward power curve. In particular, line 601 shows the estimated forward flow rate obtained from a direct computation of the forward flow rate from the observed forward power as a function of the true forward flow rate as measured by a flow sensor. Similarly, line 602 shows the estimated forward flow rate obtained from an indirect computation of the forward flow rate from an observed reverse power, as described herein, as a function of the true forward flow rate as measured by a flow sensor. It can be appreciated from FIG. 6 that, in this example, the method disclosed herein provides a comparable accuracy at low flow rates and a considerably increased accuracy at high flow rates, where the direct computation results in a heavy underestimation of the actual flow. The inventors have found that the method disclosed herein typically provides superior accuracy for flow rates where the forward power curves are flat and/or non-monotonic and comparable accuracy elsewhere.

In some embodiments, the process always, i.e. regardless of the current operational state of the pump, computes the forward flow rate based on an observed power, observed during a temporary reverse operation of the impeller. Alternatively, the process only uses the observed reverse power for computing the forward flow rate when the pump is driven in a forward operational regime where the forward power curve is flat, non-monotonic or otherwise not likely to allow for an accurate direct flow computation.

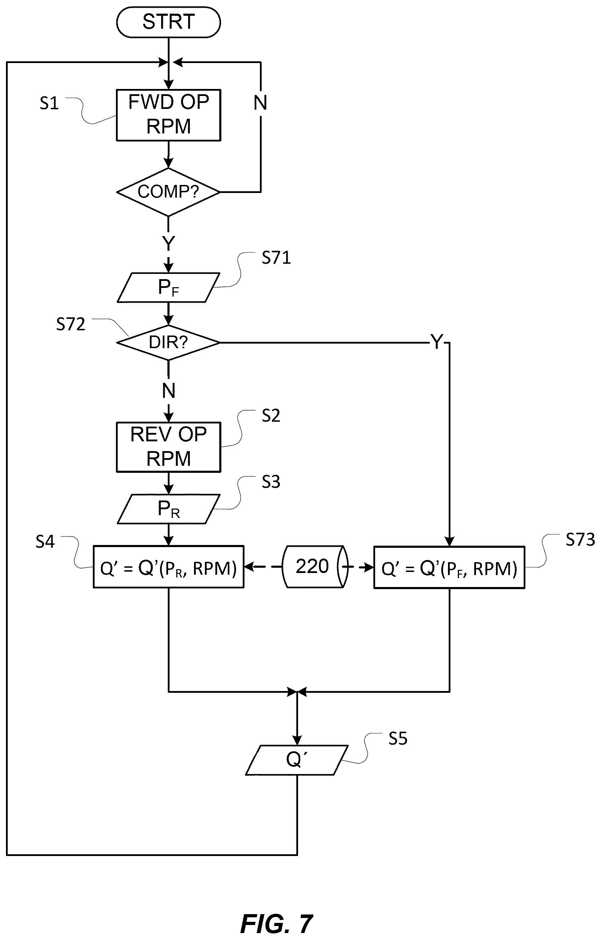

An embodiment of such a selective process is shown in FIG. 7. The process of FIG. 7 is similar to the process of FIG. 2. In particular, steps S1 through S4 of the process of FIG. 7 correspond to the corresponding steps S1 through S4 of the process of FIG. 2.

The process of FIG. 7 differs from the process of FIG. 2 in that it includes additional steps S71 through S73. In particular, when a computation of the forward flow rate is desired, the process proceeds at step S71 and initially determines the current forward rotational speed and/or the current forward motor power during forward operation of the impeller.

In step S72, the process compares the forward rotational speed and/or the forward power with one or more ranges of the rotational speed and/or motor power for which the forward power curves, e.g. the power curves 301 of FIG. 3, are too flat or even non-monotonic so as to prevent an accurate direct computation of the forward flow rate. Depending on the result of the comparison, the process either proceeds at step S2 and performs the computation of the forward flow rate indirectly via a determination of the corresponding reverse motor power, or the process proceeds at step S73 and performs a direct computation of the forward flow rate. For example, for each rotational speed, the process may compare the forward power with a corresponding threshold power, applicable at the current speed. If the observed forward power is higher than the speed-dependent threshold, the process may select to perform the flow estimation based on a measurement of the reverse power, because the pump is operated in the high-flow regime where direct flow estimation may be inaccurate.

At step S73, i.e. if a direct computation of the forward flow is considered feasible or sufficiently accurate, the process computes the forward flow rate $Q_F$ directly from the observed forward power. To this end, the process may determine the applicable forward power curve corresponding to the current forward speed, e.g. one of the forward power curves 301 illustrated in FIG. 3. To this end, the process may retrieve a matching one of a set of predetermined, in particular stored, forward power curves. It will be appreciated that the process may perform an interpolation between multiple forward power curves so as to obtain an interpolated power curve applicable to the current speed. The process then proceeds to step S5.

Accordingly, the process of FIG. 7 only performs reversal of the pump operation at step S2 followed by determination of the reverse power at step S3 and computation of the forward flow rate from the observed reverse power at step S4, when a direct computation of the forward flow rate is not expected to be accurate.

Embodiments of the method described herein can be implemented by means of hardware comprising several distinct elements, and/or at least in part by means of a suitably programmed microprocessor. In the apparatus claims enumerating several means, several of these means can be embodied by one and the same element, component or item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, elements, steps or components but does not preclude the presence or addition of one or more other features, elements, steps, components or groups thereof.

### Claims

1. A computer-implemented method for determining a forward flow rate of fluid flow through a pump, the pump comprising an impeller and a pump motor, the forward flow rate being responsive to the impeller being driven by the pump motor to rotate in a forward direction and at a forward speed, the method comprising:

   a) obtaining an observed reverse power of the pump motor when the pump motor is operated to drive the impeller in a reverse direction, opposite the forward direction, and at a reverse speed;
   b) computing an estimate of the forward flow rate from at least the observed reverse power, the forward speed and from a predetermined representation of a relationship between the reverse power, observed when the motor is operated to drive the impeller in the reverse direction at the reverse speed, and the forward flow rate through the pump when the impeller is driven in the forward direction at the forward speed.

2. A computer-implemented method according to claim 1, wherein the reverse speed is equal to the forward speed or wherein the reverse speed is different from the forward speed.

3. A method according to claim 1 or 2, wherein the predetermined representation represents a reverse power curve and a flow relationship, the reverse power curve being indicative of a relationship between the reverse flow rate and the reverse power, observable when the motor is operated to drive the impeller in the reverse direction at the reverse speed, and the flow relationship being indicative of a relationship between the forward flow rate at the forward speed and the reverse flow rate at the reverse speed.

4. A computer-implemented method according to claim 3, wherein the predetermined representation is one of a set of predetermined representations, the predetermined representations representing multiple reverse power curves at respective reverse speeds and/or multiple flow relationships at respective pairs of forward and reverse speeds.

5. A computer-implemented method according to claim 4, wherein the reverse speed is equal to the forward speed and wherein the set of predetermined representations represents multiple reverse power curves at respective reverse speeds and/or multiple flow relationships at respective reverse speeds.

6. A computer-implemented method according to any one of claims 3 through 5, wherein the predetermined representation is one of a set of predetermined representations, the set of predetermined representations representing respective direct relationships, applicable at respective reverse and forward speeds, between the reverse power, observable when operating the motor to drive the impeller in the reverse direction at the reverse speed, and the forward flow rate through the pump when the impeller is driven in the forward direction at the forward speed.

7. A computer-implemented method according to any one of the preceding claims; wherein the pump is associated with a forward power curve and a reverse power curve, the forward power curve being indicative of the forward power as a function of the forward flow rate when the impeller is driven in the forward direction at the forward speed, the reverse power curve being indicative of the reverse power as a function of the reverse flow rate when the impeller is driven in the reverse direction at the reverse speed, wherein the reverse power curve is a monotonically increasing function and the forward power curve is a non-monotonic function.

8. A computer-implemented method according to any one of the preceding claims, wherein obtaining the observed reverse power comprises:

a1) causing the pump motor to drive the impeller in the reverse direction;
a2) obtaining the observed reverse power when the pump motor is operated to drive the impeller in the reverse direction at the reverse speed; and
a3) causing the pump motor to drive the impeller in the forward direction at the forward speed when said observed reverse power has been measured.

9. A computer-implemented method according to any one of the preceding claims, comprising:

- receiving an observed forward power of the pump motor and/or the forward speed when the pump motor is operated to drive the impeller in the forward direction;
- responsive to the observed forward power and/or the forward speed, selectively either i) computing the estimate of the forward flow rate from at least the observed forward power and the forward speed, or ii) determining the estimate of the forward flow rate by performing acts a) and b).

10. A computer-implemented method according to claim 9, comprising:

- comparing the observed forward power with one or more predetermined ranges of forward powers;
- if the observed forward power falls within the one or more predetermined ranges, computing the estimate of the forward flow rate from at least the observed forward power and the forward speed; otherwise, determining the estimate of the forward flow rate by performing acts a) and b).

11. A data processing unit configured to perform the acts of the computer-implemented method according to any one of the preceding claims.

12. A computer program configured to cause a data processing unit to perform the acts of the computer-implemented method according to any one of claims 1 through 10.

13. A pump comprising a data processing unit according to claim 11.

**Patentansprüche**

1. Computerimplementiertes Verfahren zur Bestimmung der Vorwärtsdurchflussmenge eines Fluids durch eine Pumpe, wobei die Pumpe ein Laufrad und einen Pumpenmotor umfasst, wobei die Vorwärtsdurchflussmenge davon abhängt, ob das Laufrad vom Pumpenmotor angetrieben wird, um sich in Vorwärtsrichtung und mit einer Vorwärtsgeschwindigkeit zu drehen, wobei das Verfahren Folgendes umfasst:

a) Erhalten einer beobachteten Rückleistung des Pumpenmotors, wenn der Pumpenmotor betrieben wird, um das Laufrad in Rückwärtsrichtung, entgegengesetzt zur Vorwärtsrichtung, und mit Rückwärtsgeschwindigkeit anzutreiben;
b) Berechnen einer Schätzung der Vorwärtsdurchflussmenge aus mindestens der beobachteten Rückleistung, der Vorwärtsgeschwindigkeit und aus einer vorbestimmten Darstellung einer Beziehung zwischen der Rückleistung, die beobachtet wird, wenn der Motor betrieben wird, um das Laufrad in Rückwärtsrichtung mit der Rückwärtsgeschwindigkeit anzutreiben, und der Vorwärtsdurchflussmenge durch die Pumpe, wenn das Laufrad in Vorwärtsrichtung mit der Vorwärtsgeschwindigkeit angetrieben wird.

2. Computerimplementiertes Verfahren nach Anspruch 1, wobei die Rückwärtsgeschwindigkeit gleich der Vorwärtsgeschwindigkeit ist oder wobei sich die Rückwärtsgeschwindigkeit von der Vorwärtsgeschwindigkeit unterscheidet.

3. Verfahren nach Anspruch 1 oder 2, wobei die vorbestimmte Darstellung eine Rückleistungskurve und eine Durchflussbeziehung darstellt, wobei die Rückleistungskurve eine Beziehung zwischen der Rückwärtsdurchflussrate und der Rückleistung angibt, die beobachtbar ist, wenn der Motor betrieben wird, um das Laufrad in der Rückwärtsrichtung mit der Rückwärtsgeschwindigkeit anzutreiben, und die Durchflussbeziehung eine Beziehung zwischen der Vorwärtsdurchflussmenge bei der Vorwärtsgeschwindigkeit und der Rückwärtsdurchflussrate bei der Rückwärtsgeschwindigkeit angibt.

4. Computerimplementiertes Verfahren nach Anspruch 3, wobei die vorbestimmte Darstellung eine aus einem Satz vorbestimmter Darstellungen ist, wobei die vorbestimmten Darstellungen mehrere Rückleistungskurven bei jeweiligen Rückwärtsgeschwindigkeiten und/oder mehrere Durchflussbeziehungen bei jeweiligen Paaren von Vorwärts- und Rückwärtsgeschwindigkeiten darstellen.

5. Computerimplementiertes Verfahren nach Anspruch 4, wobei die Rückwärtsgeschwindigkeit gleich der Vorwärtsgeschwindigkeit ist und wobei der Satz vorbestimmter Darstellungen mehrere Rückleistungskurven bei jeweiligen Rückwärtsgeschwindigkeiten und/oder mehrere Durchflussbeziehungen bei jeweiligen Rückwärtsgeschwindigkeiten darstellt.

6. Computerimplementiertes Verfahren nach einem der Ansprüche 3 bis 5, wobei die vorbestimmte Darstellung eine aus einem Satz vorbestimmter Darstellungen ist, wobei der Satz vorbestimmter Darstellungen jeweilige direkte Beziehungen, die bei jeweiligen Rückwärts- und Vorwärtsgeschwindigkeiten anwendbar sind, zwischen der Rückleistung, die beim Betrieb des Motors beobachtbar ist, um das Laufrad in Rückwärtsrichtung mit der Rückwärtsgeschwindigkeit anzutreiben, und der Vorwärtsdurchflussmenge durch die Pumpe, wenn das Laufrad in Vorwärtsrichtung mit der Vorwärtsgeschwindigkeit angetrieben wird, darstellt.

7. Computerimplementiertes Verfahren nach einem der vorstehenden Ansprüche; wobei die Pumpe einer Vorwärtsleistungskurve und einer Rückleistungskurve zugeordnet ist, wobei die Vorwärtsleistungskurve die Vorwärtsleistung in Abhängigkeit von der Vorwärtsurchflussmenge angibt, wenn das Laufrad in Vorwärtsrichtung mit der Vorwärtsgeschwindigkeit angetrieben wird, die Rückleistungskurve die Rückleistung in Abhängigkeit von der Rückwärtsdurchflussmenge angibt, wenn das Laufrad in Rückwärtsrichtung mit der Rückwärtsgeschwindigkeit angetrieben wird, wobei die Rückleistungskurve eine monoton steigende Funktion ist und die Vorwärtsleistungskurve eine nicht-monotone Funktion ist.

8. Computerimplementiertes Verfahren nach einem der vorstehenden Ansprüche, wobei das Erhalten der beobachteten Rückleistung Folgendes umfasst:

a1) Veranlassen des Pumpenmotors, das Laufrad in die Rückwärtsrichtung anzutreiben;
a2) Erhalten der beobachteten Rückleistung, wenn der Pumpenmotor betrieben wird, um das Laufrad in Rückwärtsrichtung mit der Rückwärtsgeschwindigkeit anzutreiben; und
a3) Veranlassen des Pumpenmotors, das Laufrad in der Vorwärtsrichtung mit der Vorwärtsgeschwindigkeit anzutreiben, wenn die beobachtete Rückleistung gemessen worden ist.

9. Computerimplementiertes Verfahren nach einem der vorstehenden Ansprüche, umfassend:

- Empfangen einer beobachteten Vorwärtsleistung des Pumpenmotors und/oder der Vorwärtsgeschwindigkeit, wenn der Pumpenmotor betrieben wird, um das Laufrad in die Vorwärtsrichtung anzutreiben;
- als Reaktion auf die beobachtete Vorwärtsleistung und/oder die Vorwärtsgeschwindigkeit, selektiv entweder i) Berechnen der Schätzung der Vorwärtsdurchflussmenge aus mindestens der beobachteten Vorwärtsleistung und der Vorwärtsgeschwindigkeit oder ii) Bestimmen der Schätzung der Vorwärtsdurchflussmenge durch Durchführen von Handlungen a) und b).

10. Computerimplementiertes Verfahren nach Anspruch 9, umfassend:

- Vergleichen der beobachteten Vorwärtsleistung mit einem oder mehreren vorbestimmten Bereichen von Vorwärtsleistungen;
- wenn die beobachtete Vorwärtsleistung in einen oder mehrere vorbestimmte Bereiche fällt, Berechnen der Schätzung der Vorwärtsdurchflussmenge aus mindestens der beobachteten Vorwärtsleistung und der Vorwärtsgeschwindigkeit; ansonsten Bestimmen der Schätzung des Vorwärtsdurchflussmenge durch Durchführen von Handlungen a) und b).

11. Datenverarbeitungseinheit, die konfiguriert ist, um die Handlungen des computerimplementierten Verfahrens nach einem der vorstehenden Ansprüche auszuführen.

12. Computerprogramm, das konfiguriert ist, um eine Datenverarbeitungseinheit zu veranlassen, die Handlungen des computerimplementierten Verfahrens nach einem der Ansprüche 1 bis 10 duchzuführen.

13. Pumpe, die eine Datenverarbeitungseinheit nach Anspruch 11 umfasst.

**Revendications**

1. Procédé mis en œuvre par ordinateur de détermination d'un débit d'écoulement vers l'avant d'un écoulement de fluide à travers une pompe, la pompe comprenant une turbine et un moteur de pompe, le débit d'écoulement vers l'avant étant sensible à la turbine qui est entraînée par le moteur de pompe pour tourner dans une direction vers l'avant et à une vitesse vers l'avant, le procédé comprenant :

a) l'obtention d'une puissance inverse observée du moteur de pompe lorsque le moteur de pompe est actionné pour entraîner la turbine dans une direction inverse, opposée à la direction vers l'avant, et à une vitesse inverse ;

b) le calcul d'une estimation du débit d'écoulement vers l'avant à partir d'au moins la puissance inverse observée, la vitesse vers l'avant et une représentation prédéterminée d'une relation entre la puissance inverse, observée lorsque le moteur est utilisé pour entraîner la turbine dans la direction inverse à la vitesse inverse, et le débit d'écoulement vers l'avant à travers la pompe lorsque la turbine est entraînée dans la direction vers l'avant à la vitesse vers l'avant.

2. Procédé mis en œuvre par ordinateur selon la revendication 1, dans lequel la vitesse inverse est égale à la vitesse vers l'avant ou dans lequel la vitesse inverse est différente de la vitesse vers l'avant.

3. Procédé selon la revendication 1 ou 2, dans lequel la représentation prédéterminée représente une courbe de puissance inverse et une relation d'écoulement, la courbe de puissance inverse étant indicative d'une relation entre le débit d'écoulement inverse et la puissance inverse, observable lorsque le moteur est actionné pour entraîner la turbine dans la direction inverse à la vitesse inverse, et la relation d'écoulement étant indicative d'une relation entre le débit d'écoulement vers l'avant à la vitesse vers l'avant et le débit d'écoulement inverse à la vitesse inverse.

4. Procédé mis en œuvre par ordinateur selon la revendication 3, dans lequel la représentation prédéterminée est l'une d'un ensemble de représentations prédéterminées, les représentations prédéterminées représentant plusieurs courbes de puissance inverse à des vitesses inverses respectives et/ou plusieurs relations d'écoulement aux paires respectives de vitesses vers l'avant et inverse.

5. Procédé mis en œuvre par ordinateur selon la revendication 4, dans lequel la vitesse inverse est égale à la vitesse vers l'avant et dans lequel l'ensemble de représentations prédéterminées représente plusieurs courbes de puissance inverse à des vitesses inverses respectives et/ou plusieurs relations d'écoulement à des vitesses inverses respectives.

6. Procédé mis en œuvre par ordinateur selon l'une quelconque des revendications 3 à 5, dans lequel la représentation prédéterminée est l'une d'un ensemble de représentations prédéterminées, l'ensemble de représentations prédéterminées représentant des relations directes respectives, applicables aux vitesses inverse et vers l'avant respectives, entre la puissance inverse, observable lors de l'actionnement du moteur pour entraîner la turbine dans la direction inverse à la vitesse inverse, et le débit d'écoulement vers l'avant à travers la pompe lorsque la turbine est entraînée dans la direction vers l'avant à la vitesse vers l'avant.

7. Procédé mis en œuvre par ordinateur selon l'une quelconque des revendications précédentes ; dans lequel la pompe est associée à une courbe de puissance vers l'avant et à une courbe de puissance inverse, la courbe de puissance vers l'avant indiquant la puissance vers l'avant en fonction du débit d'écoulement vers l'avant lorsque la turbine est entraînée dans la direction vers l'avant à la vitesse vers l'avant, la courbe de puissance inverse indiquant la puissance inverse en fonction du débit d'écoulement inverse lorsque la turbine est entraînée dans la direction inverse à la vitesse inverse, dans lequel la courbe de puissance inverse est une fonction croissante de façon monotone et la courbe de puissance vers l'avant est une fonction non monotone.

8. Procédé mis en œuvre par ordinateur selon l'une quelconque des revendications précédentes, dans lequel l'obtention de la puissance inverse observée comprend :

a1) le fait d'amener le moteur de pompe à entraîner la turbine dans la direction inverse ;

a2) l'obtention de la puissance inverse observée lorsque le moteur de pompe est actionné pour entraîner la turbine dans la direction inverse à la vitesse inverse ; et

a3) le fait d'amener le moteur de pompe à entraîner la turbine dans la direction vers l'avant à la vitesse vers l'avant lorsque ladite puissance inverse observée a été mesurée.

9. Procédé mis en œuvre par ordinateur selon l'une quelconque des revendications précédentes, comprenant :

- la réception d'une puissance vers l'avant observée du moteur de pompe et/ou de la vitesse vers l'avant lorsque le moteur de pompe est actionné pour entraîner la turbine dans la direction vers l'avant ;

- en réponse à la puissance vers l'avant observée et/ou à la vitesse vers l'avant, soit i) le calcul de l'estimation du débit d'écoulement vers l'avant à partir d'au moins la puissance vers l'avant observée et la vitesse vers l'avant, soit ii) la détermination de l'estimation du débit d'écoulement vers l'avant en effectuant les actions a) et b), de manière sélective.

10. Procédé mis en œuvre par ordinateur selon la revendication 9, comprenant :

   - la comparaison de la puissance vers l'avant observée à une ou plusieurs plages prédéterminées de puissances vers l'avant ;
   - si la puissance vers l'avant observée se situe dans les une ou plusieurs plages prédéterminées, le calcul de l'estimation du débit d'écoulement vers l'avant à partir d'au moins la puissance vers l'avant observée et la vitesse vers l'avant ; sinon, la détermination de l'estimation du débit d'écoulement vers l'avant en effectuant les actions a) et b).

11. Unité de traitement de données configurée pour exécuter les actions du procédé mis en œuvre par ordinateur selon l'une quelconque des revendications précédentes.

12. Programme informatique configuré pour amener une unité de traitement de données à exécuter les actions du procédé mis en œuvre par ordinateur selon l'une quelconque des revendications 1 à 10.

13. Pompe comprenant une unité de traitement de données selon la revendication 11.

**FIG. 1**

**FIG. 2**

**FIG. 3**

**FIG. 4**

**FIG. 5**

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3036509 A

- EP 3822489 A1